# Europäisches Patentamt

## European Patent Office

### Office européen des brevets

(11) Publication number: **0 087 477**
**B1**

(12) **EUROPEAN PATENT SPECIFICATION**

(45) Date of publication of patent specification: **30.11.88**

(51) Int. Cl.⁴: **G 02 F 1/13**, G 09 F 9/00

(21) Application number: **82902647.5**

(22) Date of filing: **06.09.82**

(86) International application number:
**PCT/JP82/00354**

(87) International publication number:
**WO 83/00936 17.03.83 Gazette 83/07**

(54) **LIQUID CRYSTAL DISPLAY DEVICE.**

(30) Priority: **07.09.81 JP 140606/81**
**26.05.82 JP 89531/82**

(43) Date of publication of application:
**07.09.83 Bulletin 83/36**

(45) Publication of the grant of the patent:
**30.11.88 Bulletin 88/48**

(84) Designated Contracting States:
**DE FR GB NL**

(56) References cited:
**FR-A-2 284 237**
**FR-A-2 373 076**
**FR-A-2 408 885**
**GB-A-1 569 688**
**JP-A-53 145 654**
**JP-A-54 058 042**
**JP-B-55 010 184**
**US-A-3 666 947**

**IBM Technical Disclosure Bulletin, vo.. 21, no. 5, October 1978, p. 2007**

(73) Proprietor: **SONY CORPORATION**
**7-35 Kitashinagawa 6-Chome Shinagawa-ku**
**Tokyo 141 (JP)**

(72) Inventor: **URABE, Tetsuo Sony Corporation**
**7-35, Kitashinagawa 6-chome Shinagawa-ku**
**Tokyo 141 (JP)**

(74) Representative: **Thomas, Christopher Hugo et al**
**D Young & Co 10 Staple Inn**
**London WC1V 7RD (GB)**

(56) References cited:

**IBM Technical Disclosure Bulletin, vol. 24, no. 3, August 1981, pp. 1570-1571**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to liquid crystal projection display apparatus in which a liquid crystal cell is irradiated by a laser light beam modulated by a signal based on an optical image to be displayed, for example, a video signal.

In a display mode of such a liquid crystal display apparatus, the laser light beam is irradiated on the liquid crystal cell and the energy of the laser light is converted into heat to heat the liquid crystal, so giving rise to local phase transition in the liquid crystal. Although this phase transition would return to the original phase when the irradiation is stopped, if the heated portion is rapidly cooled the disorder in the orientation state of the liquid crystal caused by the phase transition remains substantially the same. Hence an optical scattering centre is maintained, whereby a memory effect, namely, the writing of the optical image, is performed.

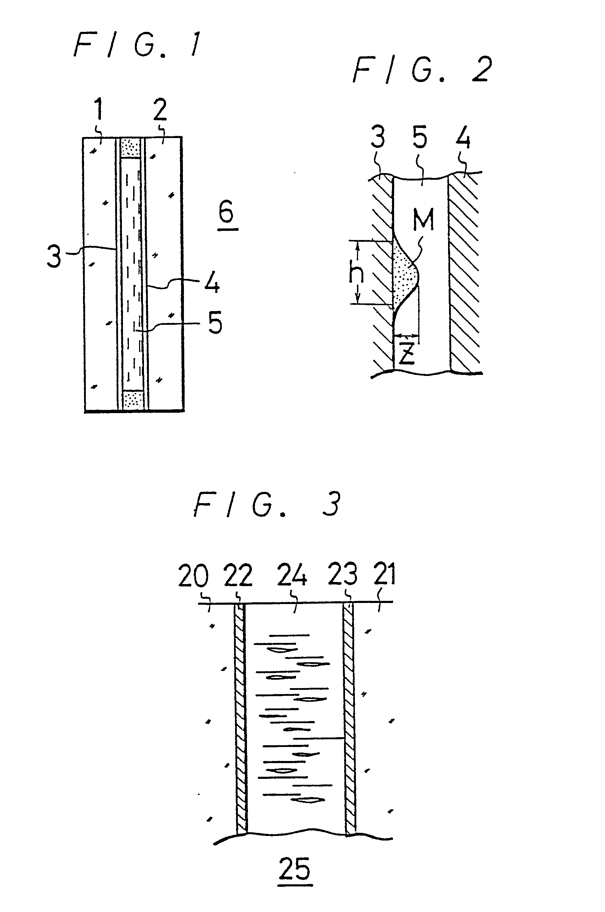

In such a liquid crystal display apparatus, when writing an optical image it is important efficiently to convert the energy of the writing laser light beam into heat and to transmit the heat to the liquid crystal. As, for example, shown in Figure 1 of the accompanying drawings, in a previously proposed liquid crystal display apparatus of this kind, there are provided opposing glass base plates 1 and 2 with transparent electrodes 3 and 4 formed on their inner surfaces. A liquid crystal layer 5 is sealed between the electrodes 3 and 4 to form a liquid crystal cell 6. Making use of the feature that the transparent electrodes 3 and 4 used in the liquid crystal cell 6 have a light absorbing characteristic over a wide range of the near-infrared region, a converging $Nd^{3+}$ YAG laser light beam having an oscillation line in the near-infrared region is employed. Thus in part of the transparent electrode 3, the optical energy of the laser light beam is converted to heat, and this heat is transmitted to the liquid crystal layer 5 adjoining the transparent electrode 3, whereby writing by the aforesaid phase transition is performed in the liquid crystal. In order to improve the conversion efficiency of the optical energy to heat, the film thickness of the transparent electrode 3 has to be increased. But, if the film thickness is increased, a problem arises in that the light transmission through the transparent electrode 3 becomes poor. Also, in order to produce a transparent electrode 3 of sufficient thickness it is normally formed by vapour deposition, and the vapour deposition has to be repeated several times, thereby increasing the manufacturing cost. Moreover, if the film thickness of the transparent electrode 3 is increased, then the thermal conductivity of the transparent electrode 3 is significantly higher than that of the liquid crystal. Thus, the thermal conversion efficiency achieved by increasing the film thickness of the transparent electrode 3 conflicts with the transmission efficiency with which heat is transmitted to the liquid crystal. Thus substantial improvement in efficiency is not achieved.

Instead of converting the laser light beam to heat in part of the transparent electrode as described above, there has been proposed another method in which an aluminium electrode film is provided, and part of this aluminium film is employed to convert the laser light beam to heat, thereby to perform writing of an optical image. With this method, since the extinction coefficient of the aluminium film is large in a wide range from the visible region to the near-infrared region, the conversion efficiency from light to heat is satisfactory, and the aluminium film itself acts as a blocking layer for light, to separate the write-in side from the read-out side. Thus, it is possible to employ a laser light source such as an He-Ne laser or an Ar ion-laser, having an oscillation line in the visible region. However, the reflectivity of the aluminium electrode film is very high, so that a reflection-preventing film has additionally to be provided, leading to an increase in the manufacturing cost.

Moreover, where in a transparent electrode or an aluminium electrode film the optical energy of the laser light beam is converted to thermal energy and this thermal energy is transmitted to the liquid crystal, the heat diffusion takes place not only in the thickness direction of the liquid crystal cell 6 but also in the surface direction thereof, so that a sufficiently high resolution cannot be achieved. That is, as shown in Figure 2 of the accompanying drawings, a portion M indicates the distribution of the optically scattered portion. It is seen that the portion M has a depth Z in the thickness direction of the liquid crystal layer 5, but that the write-in portion also spreads over a predetermined width h in the surface direction of the liquid crystal layer 5. To increase the contrast of a display, the depth Z is preferred to be as large as possible, but as the depth Z increases, so also the width h increases thereby to lower the resolution. Thus increase in contrast conflicts with high resolution.

UK patent specification GB—A—1 569 688 discloses a smectic. A liquid crystal cell comprising a dichromatic dye. Selective switching into the pseudo-homogeneous state is achieved by localized heating, such as by intensity modulation of a focused laser beam as it is scanned over the surface of the liquid crystal cell.

According to the present invention there is provided a liquid crystal projection display apparatus comprising:

a laser light source;

a liquid crystal cell including a layer of liquid crystal having a smectic A phase and/or a cholesteric phase, containing a dichromatic dye, interposed between surfaces of opposing transparent electrodes, and arranged in homeotropic orientation;

said dichromatic dye having a light absorbing characteristic with a maximum value in a wavelength region of a laser beam emitted from said laser light source;

a means for modulating said laser beam with a predetermined signal and for causing said laser beam to scan said liquid crystal cell horizontally and vertically;

a projection light source and a screen arranged with said liquid crystal cell therebetween;

an optical means located between said projection light source and said screen for projecting an optical image produced on said liquid crystal cell by said modulated laser beam onto said screen by light emitted from said projection light source; and

a means for applying an AC electric field across said opposing transparent electrodes to erase said optical image.

The invention will now be described by way of example with reference to the accompanying drawings, throughout which like parts are referred to by like references, and in which:

Figures 1 and 2 are respective cross-sectional views of a previously proposed liquid crystal display cell;

Figure 3 is an enlarged cross-sectional view of part of an embodiment of liquid crystal projection display apparatus according to the present invention;

Figure 4 is a block diagarm of an embodiment of liquid crystal projection display apparatus according to the present invention; and

Figures 5 and 6 are graphs referred to in describing the operation.

In the embodiment of Figure 3, between respective opposing surfaces of electrodes 22 and 23 attached to the inner surfaces of, for example, glass base plates 20 and 21, there is interposed a liquid crystal layer 24 made of a liquid crystal having a smectic A phase and/or a liquid crystal having a cholesteric phase mixed with dichromatic dye having a light absorbing characteristic which has a maximum value in the wavelength region of a write-in laser light beam.

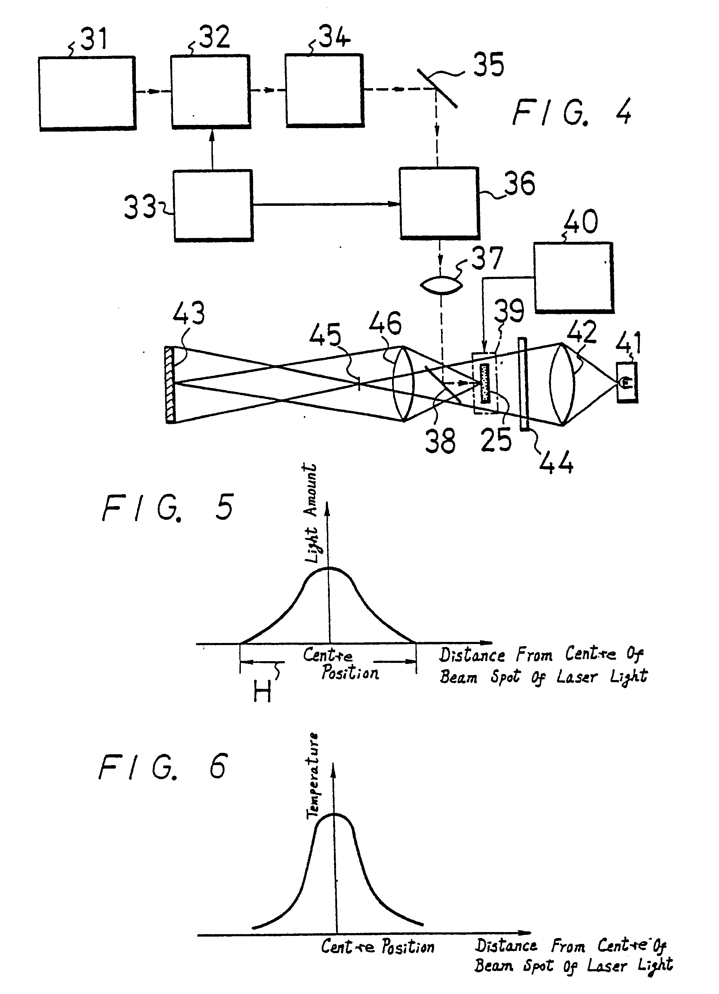

In the projector-type display apparatus of Figure 4, a laser light source 31 is an He-Ne laser light source having an oscillation line in the visible light region. A light modulator 32 modulates the laser light beam emitted from the laser light source 31, and a modulating signal source 33 for the light modulator 32 produces a modulating signal corresponding to, for example, a video signal. The apparatus also comprises a collimator lens 34 by which the laser light beam modulated by the light modulator 32 is made a parallel light bundle or luminous flux, a mirror 35, a galvano-mirror type scanning device 36 which scans the laser light beam on a liquid crystal cell 25 in the horizontal and vertical directions on the basis of horizontal and vertical synchronizing signals associated with the modulating signal from the modulating signal source 33, a focussing lens 37 by which the laser light beam scanned by the scanning device 36 is converted in the liquid crystal layer of the liquid crystal cell 25, and a deflecting mirror 38 which reflects the laser light beam incident on its mirror face but passes therethrough light other than the laser light beam.

The liquid crystal cell 25 is located in an oven 39 having a temperature control device 40 for applying heat bias to the liquid crystal cell 25. A projection light source 41 emits non-polarized light and is, for example, an incandescent lamp. A Schlieren lens 42 receives the light emitted from the light source 41, a cold filter 44 absorbs the infrared wavelengths, and a mask 45 is positioned at the focal point of the Schlieren lens 42 to form a Schlieren optical system. A projection lens 46 of the Schlieren optical system is positioned to form focal points at both the surface of the liquid crystal cell 25 and the surface of a screen 43. The elements 41 to 46 form the projection optical system which projects and enlarges the picture image written in the liquid crystal cell 25.

The operation will now be described. The laser light beam emitted from the laser light source 31 is modulated in intensity in the light modulator 32 by the modulating signal corresponding to the video signal and derived from the modulating signal source 33. The modulated laser light beam is made parallel by the collimator lens 34, and the optical axis thereof is then deflected downwards in the figure by the full reflection-type mirror 35. Thereafter, the laser light beam is subjected to horizontal and vertical deflections by the galvano-mirror type scanning device 36 on the basis of the horizontal and vertical synchronizing signals corresponding to the modulating signal from the modulating signal source 33, projected through the focussing lens 37 and the deflecting mirror 38, and then horizontally and vertically scans the liquid crystal cell 25 on the transparent electrode surface.

When the laser light beam is irradiated on the liquid crystal layer of the liquid crystal cell 25 as set forth above, the laser light beam is absorbed by the dye added to the liquid crystal, and the absorbed light energy is converted to heat thereby performing the phase transition to effect write-in in the liquid crystal cell 25. At this time, if the oven 39 is controlled by the temperature control 40 so as to keep the liquid crystal at a temperature somewhat lower than the temperature at which the phase transition takes place, the write-in can be carried out in the liquid crystal cell 25 using less heat energy.

In this way, the picture image is written in the liquid crystal cell 25.

A manufacturing method for the liquid crystal cell 25 will now be described. Between surfaces of opposing electrodes respectively attached to the inner surfaces of, for example, glass base plates 20 and 21, there is interposed a liquid crystal layer having a positive dielectric anisotropy and which is made of liquid crystal having a smectic A phase or a mixture of that liquid crystal with a liquid crystal having a cholesteric phase, with which is mixed a dichromatic dye having a light absorption characteristic with a maximum value in the wavelength region of the write-in laser light beam. In particular, the orientation of the liquid crystal layer 24, namely, the molecular orientation direction of the liquid crystal and the dye is selected as the vertical orientation or the direction perpendicular to both the electrode surfaces. Also in this case, there is employed a dichromatic dye which has a dichromatic ratio $a_{II}/a_{\perp}$ sufficiently larger than unity.

The liquid crystal forming such liquid crystal layer 24 uses, for example, CNB (cyanononyl biphenyl) and the dichromatic dye to be mixed therewith can use, for example, 3-ethyl-5[6(3-ethyl benzo - thiazolyne - 2 - ylidene) - 2,4 - hexa - dienylidyne] - 4 - oxo - 2 - thioxo-thiazolysine of merocyanin dye. Although this liquid crystal can present respective phases of crystal state→smectic A phase→nematic phase→isotropic phase depending on the temperature thereof, in the normal state, namely, in the state in which the liquid crystal is ready for writing and display of the display optical image, this liquid crystal is supposed to be in the smectic A phase. Moreover, this dye has a maximum absorption for light close to the wavelength of 640 nm, and also has a dichromatic ratio $a_{II}/a_{\perp}$ of about 7.8.

A laser light source, for example, an He-Ne laser the oscillation wavelength of which is, for example, 632.8 nm is prepared. The laser light beam therefrom is optically modulated in response to the optical image to be displayed, and is then irradiated on the liquid crystal layer of the liquid crystal cell 25. Thus, since the liquid crystal layer is arranged in the vertical orientation, prior to irradiation of the laser light beam, the extinction coefficient presents a relatively small $a_{\perp}$. But, not withstanding a small light absorption, part of the laser light beam is absorbed. That is, in this case, the laser light beam is irradiated on the liquid crystal layer so as to be converged thereon, and its beam spot has a Gaussian distribution that expands to some extent as shown in Figure 5. Particularly, since the centre part of the spot in which the amount of light is large has a large absorbing amount of light, the temperature increases substantially at that part and hence the phase transition takes place in this part. To be more precise, in this portion, the smectic A phase moves to the nematic phase, and further to the isotropic phase, and thereby the liquid crystal orientation is disordered in this portion, so the extinction coefficient is changed to the value $a_0$ which is larger than $a_{\perp}$. Since $a_0$ is selected to satisfy

$$a_0 = (a_{II} + 2a_{\perp})/3$$

and the phase of this portion is changed to the isotropic phase, the absorbing amount of the laser light beam in this portion increases more and the rise of temperature in this portion becomes abrupt. More strictly, the change of the extinction coefficient does not directly proceed to $a_0$ from $a_{\perp}$, but the extinction coefficient in the smectic A phase changes to that in the nematic phase and then to $a_0$ in the isotropic phase. As described above, although the particular rise of temperature occurs at the centre of the spot of the laser light beam, around the place where the phase transition does not yet take place, the extinction coefficient presents the small value $a_{\perp}$, so that the laser light beam is difficult to absorb. Thus, the heat conversion in this portion is less, and almost no rise in temperature takes place in the skirt portion of the distribution of the laser light beam in Figure 5 in which the amount of light is relatively small. Accordingly, a difference of temperatures between the part having the phase transition, and the nearby part having no phase transition becomes significant. In other words, the distribution of temperature becomes steep as shown in Figure 6. Therefore, when the irradiation of the laser light beam on this part is stopped, the heat at the portion where the phase transition occurs, namely, the portion with high temperature is effectively radiated and cooled rapidly. Thus, the disorder of the orientation in this portion, namely, the optical scattering centre portion becomes substantial and is formed at the narrow portion, thereby causing the picture image to be written with high resolution.

When the aforementioned CNB is employed as the liquid crystal, the phase of the liquid crystal changes to the nematic phase at 48°C, and to the isotropic phase at 49.5°C. Thus, if the temperature of the liquid crystal is kept by the oven 39 at 43°C, that is lower than the temperature at which the phase transition takes place, the phase transition of the liquid crystal can easily be caused by a small amount of heat.

The picture image written in the liquid crystal cell 25 can be erased by applying the AC electric field across the two transparent electrodes. To this end, the liquid crystal the dielectric anisotropy of which is positive, is employed.

The picture image written in the liquid crystal cell 25 as set forth above is projected and enlarged on the screen 43 by the projection optical system using the Schlieren optical system 41 to 46.

## Claims

1. A liquid crystal projection display apparatus comprising:

a laser light source (31);

a liquid crystal cell (25) including a layer of liquid crystal having a smectic A phase and/or a cholesteric phase, containing a dichromatic dye, interposed between surfaces of opposing transparent electrodes (22, 23), and arranged in homeotropic orientation;

said dichromatic dye having a light absorbing characteristic with a maximum value in a wavelength region of a laser beam emitted from said laser light source (31);

a means (32) for modulating said laser beam with a predetermined signal and for causing said laser beam to scan said liquid crystal cell (25) horizontally and vertically;

a projection light source (41) and a screen (43) arranged with said liquid crystal cell (25) therebetween;

an optical means (42, 45, 46) located between said projection light source (41) and said screen (43) for projecting an optical image produced on said liquid crystal cell (25) by said modulated laser beam onto said screen (43) by light emitted from said projection light source (41); and

a means for applying an AC electric field across said opposing transparent electrodes (22, 23) to erase said optical image.

2. Apparatus according to claim 1 wherein said projection light source (41) is a non-polarized light source (41).

3. Apparatus according to claim 1 or claim 2 wherein said optical means (42, 45, 46) is a Schlieren optical system (42, 45, 46).

4. Apparatus according to claim 1, claim 2 or claim 3 wherein said liquid crystal is cyanononyl biphenyl and said dichromatic dye is 3 - ethyl - 5 - [6(3 - ethyl benzo - thiazolyne - 2 - ylidene) - 2, 4 - hexadienylidyne] - 4 - oxo - 2 - thioxo-thiazolysine.

## Patentansprüche

1. Flüssigkristallanzeigevorrichtung, mit
einer Laserlichtquelle (31);

einem Flüssigkristallelement (25), das eine Flüssigkristallschicht enthält, die eine smektische A-Phase und/oder eine cholesterinische Phase aufweist, mit einem dichromatischen Farbstoff, die zwischen die Oberflächen gegenüberliegender transparenter Elektroden (22, 23) gelegt ist, und in homöotroper Orientierung angeordnet ist,

wobei der dichromatische Farbstoff eine lichtabsorbierende Charakteristik mit einem Maximalwert in einem Wellenlängenbereich eines von der Laserlichtquelle (31) emittierten Laserstrahls aufweist;

einer Vorrichtung (32) zur Modulation des Laserstrahls mit einem vorgegebenen Signal und zur Herbeiführung einer horizontalen und vertikalen Abtastung des Flüssigkristallelementes (31) durch den Laserstrahl;

einer Projektionslichtquelle (41) und einem Projektionsschirm (43), wobei zwischen diesen das Flüssigkristallelement (25) angeordnet ist;

einer optischen Anordnung (42, 45, 46) zwischen der Projektionslichtquelle (41) und dem Projektionsschirm (43) zur Projektion eines optischen Bildes, das auf dem Flüssigkristallelement (25) mittels des modulierten Laserstrahles auf dem Projektionsschirm (43) durch von der Projektionsquelle (41) emittiertes Licht erzeugt wird; und

einer Vorrichtung zum Anlegen eines elektrischen Wechselfeldes über die sich gegenüberliegenden transparenten Elektroden (22, 23) zum Löschen des optischen Bildes.

2. Vorrichtung nach Anspruch 1, bei der die Projektionslichtquelle (41) eine nicht polarisierte Lichtquelle (41) ist.

3. Vorrichtung nach Anspruch 1 oder 2, bei der die optische Anordnung (42, 45, 46) ein Schlieren-Optisches-System ist.

4. Vorrichtung nach den Ansprüchen 1, 2 oder 3, bei der der Flüssigkristall Cyanononylbiphenyl und der dichromatische Farbstoff 3 - Ethyl - 5 - [6(3 - ethyl - benzo - thiazolin - 2 - yliden) - 2,4 - hexadienylidyn] - 4 - oxo - 2 - thioxothiazolysin ist.

## Revendications

1. Appareil d'affichage par projection à cristal liquide, comprenant:
une source de lumière laser (31);

une cellule à cristal liquide (25) comportant une couche de cristal liquide qui possède une phase smectique A et, ou bien, une phase cholestérique, contenant un colorant dichromatique, qui est placée entre les surfaces d'électrodes transparentes opposées (22, 23) et est disposée suivant une orientation homéotropique;

ledit colorant dichromatique ayant une caractéristique d'absorption de lumière dont la valeur maximale se situe dans la région des longueurs d'onde du faisceau laser émis par ladite source de lumière laser (31);

un moyen (32) servant à moduler ledit faisceau laser à l'aide d'un signal prédéterminé et à amener ledit faisceau laser à balayer horizontalement et verticalement ladite cellule à cristal liquide (25);

une source lumineuse de projection (41) et un écran (43) disposés de façon que ladite cellule à cristal liquide (25) soit entre eux;

un moyen optique (42, 45, 46) placé entre ladite source lumineuse de projection (41) et ledit écran (43) afin de projeter une image optique, produite sur ladite cellule à cristal liquide (25) par ledit faisceau laser modulé, sur ledit écran (43) à l'aide de la lumière émise par ladite source lumineuse de projection (41); et

un moyen servant à appliquer un champ électrique alternatif entre lesdites électrodes transparentes opposées (22, 23) afin d'effacer ladite image optique.

2. Appareil selon la revendication 1, où ladite source lumineuse de projection (41) est une source lumineuse non polarisée (41).

3. Appareil selon la revendication 1 ou 2, où ledit moyen optique (42, 45, 46) est un système optique strioscopique (42, 45, 46).

4. Appareil selon la revendication 1, 2 ou 3, où ledit cristal liquide est le cyanononylbiphényle et ledit colorant dichromatique est le 3 - éthyl - 5[6(3 - éthylbenzothiazolyne - 2 - ylidène) - 2,4 - hexadiénylidyne] - 4 - oxo - 2 - thioxo-thiazolysine.

## F I G. 1

## F I G. 2

## F I G. 3

*F I G. 4*

*F I G. 5*

Light Amount

Centre Position

H

Distance From Centre Of Beam Spot Of Laser Light

*F I G. 6*

Temperature

Centre Position

Distance From Centre Of Beam Spot Of Laser Light